## Europäisches Patentamt
## European Patent Office
## Office européen des brevets

(11) Veröffentlichungsnummer: **0 200 713**
**B1**

(12) **EUROPÄISCHE PATENTSCHRIFT**

(45) Veröffentlichungstag der Patentschrift:
14.03.90

(51) Int. Cl.⁴: **H02P 5/178**

(21) Anmeldenummer: 86890068.9

(22) Anmeldetag: 20.03.86

(54) Einrichtung zur Steuerung des Feldstromes von Gleichstrommotoren.

(30) Priorität: 16.04.85 AT 1145/85

(43) Veröffentlichungstag der Anmeldung:
10.12.86 Patentblatt 86/45

(45) Bekanntmachung des Hinweises auf die Patenterteilung:
14.03.90 Patentblatt 90/11

(84) Benannte Vertragsstaaten:
AT CH DE FR GB IT LI NL SE

(56) Entgegenhaltungen:
GB-A- 2 040 085
US-A- 4 099 111

PATENTS ABSTRACTS OF JAPAN, Band 7,
Nr. 182 (E-192)[1327], 11. August 1983, Seite 91 E 192; &
JP - A - 58 86887 (HITACHI SEISAKUSHO K.K.) 24.05.1983

(73) Patentinhaber: Siemens Aktiengesellschaft Österreich,
Siemensstrasse 88 - 92, A-1210 Wien(AT)

(84) Benannte Vertragsstaaten: AT

(73) Patentinhaber: Siemens Aktiengesellschaft,
Wittelsbacherplatz 2, D-8000 München 2(DE)

(84) Benannte Vertragsstaaten: CH DE FR GB IT LI NL SE

(72) Erfinder: Hackl, Franz, Dipl.-Ing., Klein Pertholz 6,
A-3664 Martinsberg(AT)
Erfinder: Spitaler, Wolfgang, Dipl.-Ing.,
Neulinggasse 15/17, A-1030 Wien(AT)
Erfinder: Wöhrer, Franz, Dipl.-Ing.,
Kainzenbergerstrasse 2, A-4040 Puchenau(AT)

ACTORUM AG

## Beschreibung

Gegenstand der Erfindung ist eine Einrichtung zur Steuerung des Feldstromes von Gleichstrommotoren, die über die Grunddrehzahl in dem durch Feldschwächung erzielbaren höheren Drehzahlbereich betrieben werden, wobei zur Bemessung des Feldstromes eine Phasenanschnittsteuereinrichtung vorgesehen ist, die in Abhängigkeit von der Ausgangsgröße eines eine drehzahlabhängige Vorsteuer-Kennlinie abbildenden Funktionsspeichers betrieben ist.

Bekanntlich kann bei Gleichstrommotoren eine Drehzahlerhöhung durch Speisespannungssteigerung oder durch eine Schwächung des Erregerfeldes erzielt werden. Wegen der begrenzten Speisespannung kann die Motordrehzahl bei ungeschwächtem Erregerfeld nicht beliebig erhöht werden. Weiter wird die Ankerspannung während des Betriebes im Hinblick auf eine Regelreserve unter dem maximal zur Verfügung stehenden Wert gehalten. Eine Leistungsreserve ist jedoch nötig, um Laststöße ausgleichen zu können. Anderseits darf die Ankerspannung im Feldschwächbereich wegen des Leistungsverlustes nicht zu gering gehalten werden, da eine Schwächung des Erregerfeldes eine Reduzierung des Drehmomentes zur Folge hat.

Es ergibt sich somit die Notwendigkeit, bei Gleichstrommotoren, die auch in dem durch Feldschwächung erzielbaren höheren Drehzahlbereich betrieben werden, den Feldstrom in einer solchen Weise zu steuern, daß die erforderliche Regelreserve bei gleichzeitiger maximaler Leistungsausnützung der Gleichstrommaschine erhalten bleibt. Diesen Forderungen wird man am besten durch Konstanthalten der im Motor induzierten Gegen-EMK auf den Nennwert der Nenn-Gegen-EMK gerecht, was gleichbedeutend mit einem konstanten Produkt aus Motordrehzahl und der Größe des magnetischen Erregerflusses ist.

In der US-PS 4 549 122 ist ein Feldregler für Gleichstrommotoren beschrieben, bei dem in dem zur Diskussion stehenden Bereich oberhalb der Grunddrehzahl, das heißt im Bereich konstanter Leistung, das Produkt aus Motordrehzahl und Magnetfluß näherungsweise dadurch konstant gehalten wird, daß der Erreger-Feldstrom proportional zum Kehrwert der gemessenen Motordrehzahl geschwächt wird, wobei eine Analogrechenschaltung die erforderliche Rechenoperation ausführt. Nun ist aber das magnetische Erregerfeld nicht proportional dem Erregerstrom, sondern nichtlinear von der Magnetisierungskennlinie des Feld-Magnetkreises abhängig, so daß zur Vermeidung von Ankerüberspannungen bei dieser bekannten Schaltung der so ermittelte Feldstrom weiter von einer Regelung beeinflußt wird, welche die aus der gemessenen Ankerspannung und dem dem Ankerstrom proportionalen Ankerspannungsabfall gebildete Gegen-EMK mit der Nenn-Gegen-EMK der Gleichstrommaschine vergleicht.

Da Gleichstrommotoren hinsichtlich ihrer Betriebseigenschaften stark streuen und selbst bei Motoren der gleichen Type die Magnetisierungskennlinien voneinander abweichen, so daß einheitlich ausgebildete Steuereinrichtungen auch bei Motoren gleicher Type nicht immer optimal wirksam sind, hat sich die Erfindung die Aufgabe gestellt, die Vorsteuer-Kennlinie jedem Motor jeweils individuell anzupassen. Dies wird erfindungsgemäß dadurch erzielt, daß der Funktionsspeicher mit der Vorsteuer-Kennlinie programmierbar ist, wobei die Programmierung der dem Gleichstrommotor individuell zugeordneten Kennlinie beim Erstanlauf dieses Gleichstrommotors erfolgt.

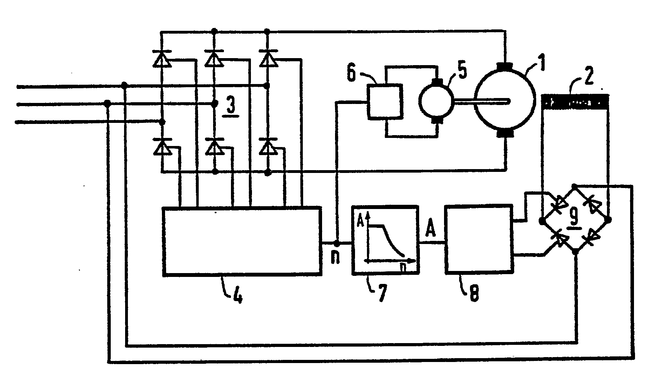

Ein Ausführungsbeispiel der Erfindung ist in der Zeichnung dargestellt. Der Gleichstrommotor, dessen Feld zu steuern ist, ist durch seinen Anker 1 und durch seine Feldwicklung 2 symbolisiert. Für die Bemessung des Ankerstromes ist eine erste Phasenanschnittsteuereinrichtung 3 vorgesehen, die in nicht näher zu beschreibender Weise von einer Ansteuereinrichtung 4 für den Ankerstrom betätigt wird. Die Drehzahl des Gleichstrommotors 1, 2 wird mittels einer Tachodynamomaschine 5 erfaßt, deren Ausgangssignal von einem Analog-Digital-Wandler 6 in ein für die nachfolgende rechnerische Auswertung vorgesehenes Digitalsignal n umgewandelt wird, das einerseits der Ansteuereinrichtung 4 und anderseits einem Funktionsspeicher 7 zugeführt wird. Der letztere liefert ein von der Drehzahl n abhängiges Ausgangssignal A gemäß einer in den Funktionsspeicher 7 einprogrammierten Vorsteuer-Kennlinie A(n). Das Ausgangssignal A wird einer Ansteuereinrichtung 8 für den Feldstrom zugeführt, die die Steuerung einer zweiten Phasenanschnittsteuereinrichtung 9 besorgt, über die die Feldwicklung 2 mit dem Feldstrom versorgt wird.

Die Einprogrammierung der Vorsteuer-Kennlinie A(n) erfolgt erfindungsgemäß beim Erstanlauf des Gleichstrommotors 1. Zweckmäßig wird hierbei der die Feldwicklung 2 durchfließende Feldstrom durch Vorgabe einzelner Werte von A in vorgegebenen Stufen eingestellt.

## Patentansprüche

Einrichtung zur Steuerung des Feldstromes von Gleichstrommotoren, die über die Grunddrehzahl hinaus in dem durch Feldschwächung erzielbaren höheren Drehzahlbereich betrieben werden, wobei zur Bemessung des Feldstromes eine Phasenanschnittsteuereinrichtung (8, 9) vorgesehen ist, die in Abhängigkeit von der Ausgangsgröße (A) eines eine drehzahlabhängige Vorsteuer-Kennlinie (A(n)) abbildenden Funktionsspeichers (7) betrieben ist, dadurch gekennzeichnet, daß der Funktionsspeicher (7) mit der Vorsteuer-Kennlinie (A(n)) programmierbar ist, wobei die Programmierung der dem Gleichstrommotor (1, 2) individuell zugeordneten Kennlinie beim Erstanlauf dieses Gleichstrommotors (1, 2) erfolgt.

## Claims

Device for controlling the field current of d.c. motors, which are operated beyond the base speed in the higher speed range achievable by field weakening, a phase-angle control device (8, 9) being provided for dimensioning the field current, which is operated as a function of the output quantity (A) of a function store (7) which images a speed-dependent precontrol characteristic (A(n)), characterized in that the function store (7) can be programmed with the precontrol characteristic (A(n)), the programming of the characteristic individually assigned to the d.c. motor (1, 2) being done upon the primary start of this d.c. motor (1, 2).

## Revendications

Dispositif pour commander le courant inducteur de moteurs à courant continu, que l'on fait fonctionner, au-delà de la vitesse de rotation de base, dans une gamme supérieure de vitesses de rotation, pouvant être obtenue par un affaiblissement du champ, et dans lequel il est prévu, pour la mesure du champ inducteur, un dispositif de commande à découpage de phase (8, 9), qui est commandé en fonction de la grandeur de sortie (A) d'une mémoire de fonctions (7), qui forme une courbe caractéristique de commande pilote (A(n)), qui dépend de la vitesse de rotation, caractérisé par le fait que la mémoire de fonctions (7) est programmable à l'aide d'une courbe caractéristique de commande pilote (A(n)), la programmation de la courbe caractéristique associée individuellement au moteur à courant continu (1, 2) s'effectuant lors du premier démarrage de ce moteur à courant continu (1, 2).